# EUROPÄISCHE PATENTANMELDUNG

(11) **EP 2 762 423 A1**
(43) Veröffentlichungstag der Anmeldung: **06.08.2014**
(21) Anmeldenummer: 14154019.5
(22) Anmeldetag: 05.02.2014
(51) Int. Cl.: B65G 17/12

(54) **Vorrichtung zum Höhentransport von Stapeln mit einem Dämpfungselement**

(30) Priorität: 05.02.2013 DE 102013101140
(71) Anmelder: Windmöller & Hölscher KG, 49525 Lengerich (DE)
(72) Erfinder: Hawighorst, Thomas, 49205 Hasbergen (DE); Tillmann, Guido, 48607 Ochtrup (DE); Dolák, Adolf, 796 01 Prostejov (CZ)
(74) Vertreter: Vogel, Andreas

(57) **Zusammenfassung**

Die Erfindung betrifft eine Vorrichtung zum Höhentransport von Stapeln (1), insbesondere Säcken, Sackhalbzeugen, Schlauchabschnitten oder flachliegenden Säcken, welche folgende Merkmale umfasst: eine Transportvorrichtung (20), die mehrere, umlaufende Riemenelemente (21,22,23,24) aufweist, an denen zumindest ein flexibles Mattenelement (40) angeordnet ist, eine Zuführebene (2), um Stapel (1) dem Mattenelement (40) zuzuführen, eine Abführebene (3), um Stapel (1) von dem Mattenelement (40) abzuführen, ein Antrieb (10), der eine Vielzahl an Getriebeelementen (11,12,13,14,15,16,17) aufweist, die in Wirkverbindung mit den Riemenelementen (21,22,23,24) stehen, um das Mattenelement (40) von der Zuführebene (2) in die Abführebene (3) und zurück zu bewegen, wobei die Getriebeelemente (11,12,13,14,15,16,17) derart angeordnet sind, dass sich eine Hubzone (4) und eine Transportzone (5) bilden, wobei die Hubzone (4) zwischen der Zuführebene (2) und der Abführebene (3) liegt, wobei in der Hubzone (4) das Mattenelement (40) eine Standfläche (48) für den Stapel (1) bietet, die im wesentlichen senkrecht zur Bewegungsrichtung des Mattenelementes (40) ausgerichtet ist, und in der Transportzone (5) die Standfläche (48) des Mattenelementes (40) parallel zur Bewegungsrichtung des Mattenelementes (40) ist, wobei am Mattenelement (40) mindestens ein Dämpfungselement (60) angeordnet ist, um auftretenden Schwingungen am Mattenelement (40) entgegenzuwirken.

## Beschreibung

Die Erfindung betrifft eine Vorrichtung zum Höhentransport von Stapeln.

Höhenförderer sind aus dem Stand der Technik bekannt, die flachliegende Gegenstände, die übereinander gestapelt sind, von einer ersten Höhe in eine zweite Höhe über eine Transportvorrichtung befördern. Hierbei umfasst die bekannte Vorrichtung eine Zuführebene, in der die Stapel einem Mattenelement zugeführt werden. Dieses Mattenelement ist in der Regel flexibel ausgeführt und wird über eine Transportvorrichtung bewegt. Bekannte Transportvorrichtungen weisen beispielsweise umlaufende Riemenelemente auf, an denen das Mattenelement befestigt ist. Zudem ist aus dem Stand der Technik bekannt, die Riemenelemente über einen Antrieb zu bewegen. Hierbei steht der Antrieb mit den Riemenelementen in Wirkverbindung, um das Mattenelement von der Zuführebene in die Abführebene und zurück zu bewegen. Da die Herstellungsgeschwindigkeiten bei den Gegenständen, die in Stapeln vom Höhenförderer zu transportieren sind, in der Vergangenheit wesentlich sich erhöht haben, ist das Bestreben eine Leistungssteigerung beim Höhenförderer zu bewirken. Das bedeutet, dass die Geschwindigkeit des Transports von Stapeln in der Hubzone des Höhenförderers zu steigern ist. Nachteiligerweise hat sich gezeigt, dass bei höheren Transportgeschwindigkeiten die Stapel, die sich auf dem Mattenelement befinden, zum Ausschuppen neigen, das bedeutet, dass einige Elemente, Gegenstände des Stapels sich verschieben. Folglich weist der Stapel in der Abführebene nicht mehr seine Geometrie auf, die er in der Zuführebene hatte. Falls die zu transportierenden Stapel nach dem Höhenförderer noch zu palettieren sind und/oder zu verpacken sind, ergeben sich aufgrund der veränderten Stapelform weitere Probleme. Da einige Elemente des Stapels sich nicht mehr in der gewünschten Position befinden, kann somit die anschließende Palettierqualität und/oder Packqualität nach dem Höhenförderer leiden.

Die Aufgabe der vorliegenden Erfindung ist es die oben genannten Nachteile zu vermeiden, insbesondere eine Vorrichtung zum Höhentransport von Stapeln bereitzustellen, die in ihrer Leistung zur Beförderung der Stapel erhöht ist, ohne dass der zu transportierende Stapel seine Grundform verliert.

Die Aufgabe der vorliegenden Erfindung wird durch sämtliche Merkmale des Patentanspruches 1 gelöst. In den abhängigen Patentansprüchen sind mögliche Ausführungsformen beschrieben.

Erfindungsgemäß umfasst die Erfindung eine Vorrichtung zum Höhentransport von Stapeln, insbesondere Säcken, Sackhalbzeugen, Schlauchabschnitten oder flachliegenden Säcken. Zudem umfasst der erfindungsgemäße Höhenförderer eine Transportvorrichtung, die mehrere, umlaufende Riemenelemente aufweist, an denen zumindest ein flexibles Mattenelement angeordnet ist, eine Zuführebene, um Stapel dem Mattenelement zuzuführen, eine Abführebene, um Stapel von dem Mattenelement abzuführen. Ferner weist die erfindungsgemäße Vorrichtung einen Antrieb auf, der eine Vielzahl an Getriebeelementen aufweist, die in Wirkverbindung mit den Riemenelementen stehen, um das Mattenelement von der Zuführebene in die Abführebene und zurück zu bewegen, wobei die Getriebeelemente derart angeordnet sind, dass sich eine Hubzone und eine Transportzone bilden, wobei die Hubzone zwischen der Zuführebene und der Abführebene liegt, wobei in der Hubzone das Mattenelement eine Standfläche für den Stapel bietet, die im wesentlichen senkrecht zur Bewegungsrichtung des Mattenelementes ausgerichtet ist, und in der Transportzone die Standfläche des Mattenelementes parallel zur Bewegungsrichtung des Mattenelementes ist, wobei am Mattenelement mindestens ein Dämpfungselement angeordnet ist, um auftretenden Schwingungen am Mattenelement entgegenzuwirken.

Ein wesentlicher Vorteil des Dämpfungselementes ist, dass dieses derart auf das Mattenelement wirkt, dass mögliche auf das Mattenelement wirkende Kräfte und/oder Impulse nicht bewirken, dass das Mattenelement in Schwingungen gerät, die ein Ausschuppen der zu transportierenden Stapel auslösen. Das oder die Dämpfungselemente wirken vorteilhafterweise direkt auf das Mattenelement und eliminieren mögliche Schwingungen des Mattenelements. Vorteilhafterweise kontaktiert das Dämpfungselement das Mattenelement während die Stapel transportiert werden, wobei vorteilhafterweise das Dämpfungselement sowie das Mattenelement aus unterschiedlichen Werkstoffen ausgebildet sind. In einer möglichen Ausführungsform der Erfindung ist das Dämpfungselement aus einem Gleitwerkstoff ausgebildet. Die Ausführung des Dämpfungselementes aus einem Kunststoff kann ebenfalls von Vorteil sein, da insbesondere geringe Reibungskräfte und/oder Geräuschentwicklungen entstehen.

In einer die Erfindung verbessernden Maßnahme kann das Dämpfungselement in der Zuführebene und/oder in der Abführebene angeordnet sein. Es hat sich gezeigt, dass besonders in der Zuführebene aber auch in der Abführebene Schwingungen und/oder Impulse auf das Mattenelement besonders häufig übertragen werden, die nachteiligerweise die gewünschte Stapelform des zu transportierenden Stapels verändern. Die umlaufenden Riemenelemente werden an definierten Orten durch die Getriebeelemente umgelenkt, wodurch radiale Kräfte, Schwingungen und/oder Impulse auf die Riemenelemente wirken, die wiederum nachteilig auf das an den Riemenelementen befestigte Mattenelement sich auswirken. Da insbesondere in der Zuführebene als auch in der Abführebene Richtungswechsel der umlaufenden Riemenelemente vorhanden sind, ist der Einsatz eines oder mehrerer Dämpfungselemente an diesen Stellen besonders sinnvoll.

Die Vorrichtung zum Höhentransport von Stapeln kann ferner umfassen, dass das Dämpfungselement am Gestell der Vorrichtung befestigt ist. Ein Vorteil dieser Ausführungsform ist, dass wirkungsvoll mögliche auf das Dämpfungselement wirkende Schwingungen und/oder Kräfte und/oder Impulse aufgenommen werden können, so dass ein ruhiger Transport der Stapel in der Transportzone sowie in der Hubzone entsteht.

Vorteilhafterweise kann das Dämpfungselement vor der Hubzone und/oder nach der Hubzone am Mattenelement anliegen. Der Kontakt zwischen dem Dämpfungselement und dem Mattenelement begünstigt die Aufnahme von etwaigen Schwingungen und/oder Kräften und/oder Impulsen, die bei der Umlenkung des flexiblen Mattenelementes und/oder bei der Umlenkung der Riemenelemente entstehen.

Zudem kann die erfindungsgemäße Vorrichtung mehrere Dämpfungselemente aufweisen, die am Randbereich des Mattenelementes wirken. Das bedeutet, dass gleichzeitig an einem Mattenelement zwei oder mehrere Dämpfungselemente das Mattenelement kontaktieren.

Vorteilhafterweise kann das Dämpfungselement auf die Standfläche wirken, auf der der Stapel aufsetzbar ist. Hierbei ist es denkbar, dass der Stapel zwischen den wirkenden Dämpfungselementen auf der Standfläche sich befindet, wobei ein genügend großer Abstand zwischen dem Dämpfungselement und dem Stapel vorliegt.

Zudem kann vorgesehen sein, dass das Dämpfungselement verfahrbar am Gestell angeordnet ist, insbesondere dass ein Antrieb vorgesehen ist, um das Dämpfungselement an die Standfläche des Mattenelementes bis zum Kontakt heranzufahren. Somit ist es denkbar, dass die relative Position des Dämpfungselementes bezogen auf das Mattenelement einstellbar ist, um eine optimale Kontaktierung zwischen dem Dämpfungselement und dem Mattenelement zu erreichen, die bewirkt, dass wirkungsvoll Schwingen am Mattenelement reduziert bzw. eliminiert werden können. Beispielsweise kann die erfindungsgemäße Vorrichtung Sensorelemente aufweisen, die den Verfahrweg des Dämpfungselementes und/oder die Position des Mattenelementes sowie die der Standfläche erkennen. Die Sensorelemente können mit dem Antrieb oder mit einer entsprechenden Steuerung in Datenkommunikation stehen, so dass das Dämpfungselement optimal zum Mattenelement verfahren werden kann.

Des Weiteren offenbart die erfindungsgemäße Vorrichtung, dass das Dämpfungselement eine stabartige Leiste und/oder Schiene ist, die insbesondere starr und/oder unbeweglich zum Mattenelement angeordnet ist. Die Ausbildung des Dämpfungselementes als stabartige Leiste oder Schiene hat den Vorteil, dass eine relativ große Kontaktfläche seitens des Dämpfungselementes gebildet werden kann, die unmittelbar auf der Standfläche des Mattenelementes wirkt. Zudem können wirksam Schwingungen, Kräfte oder Impulse durch ein derartiges geometrisch geformtes Dämpfungselement aufgenommen werden.

Ebenfalls kann die erfindungsgemäße Vorrichtung vorsehen, dass das Dämpfungselement eine Rolle ist, die das Mattenelement kontaktiert und eine Achse aufweist, um die die Rolle während der Bewegung des Mattenelementes rotiert. Die Rolle rollt somit während der Bewegung des Mattenelementes an der Standfläche des Mattenelementes ab und kann wirkungsvoll Schwingungen, Kräfte oder Impulse, die auf das Mattenelement wirken können, aufnehmen, ohne dass eine Ausschuppung des auf dem Mattenelement sich befindenden Stapels entsteht. Wie auch die stabartige Leiste und/oder Schiene, die als Dämpfungselement dienen können, kann auch die Rolle mit einem Antrieb verbunden sein, der dafür sorgt, dass das Dämpfungselement verfahrbar am Gestellt angeordnet ist.

Ebenfalls kann die erfindungsgemäße Vorrichtung ein Dämpfungselement umfassen, das bezüglich der Breite des Mattenelementes einstellbar ist, wobei insbesondere die Einstellung in Abhängigkeit von Format des Stapels abhängt. Die Einstellung der Position des Dämpfungselementes erfolgt derart, dass ein genügend großer Abstand zwischen dem Stapel, der auf der Standfläche sich befindet und dem Dämpfungselement vorliegt.

Vorteilhafterweise kann das Mattenelement zwei Seitenbereiche aufweisen, wobei an jedem Seitenbereich zwei Riemenelemente befestigt sind, so dass am ersten Seitenbereich ein vorderes und ein hinteres Riemenelement und am zweiten Seitenbereich ein vorderes und ein hinteres Riemenelement befestigt sind, wobei die Riemenelemente jedes Seitenbereiches voneinander beabstandet sind. Beispielsweise kann das Mattenelement eine Rechteckförmige Gestalt oder eine quadratförmige Gestalt aufweisen, wobei vier Befestigungsbereiche vorgesehen sind, die dafür sorgen, dass das Mattenelement mit den umlaufenden Riemenelementen verbunden ist. Vorteilhafterweise ist jedes der vier Riemenelemente mit lediglich einem Befestigungspunkt des Mattenelementes verbunden. Die Befestigung von jeweils zwei Riemenelementen an jedem Seitenbereich des Mattenelementes hat den Vorteil, dass das Mattenelement zuverlässig durch die Transportzone und die Hubzone verfahren werden kann, ohne dass das Mattenelement verkippen kann. Der Einsatz von vier Riemenelementen hat zudem den Vorteil, dass hohe Transportgeschwindigkeiten erzielbar sind, wobei gleichzeitig zuverlässig Umlenkungen an den Getriebeelementen durchführbar sind, ohne dass das Mattenelement seine gewünschte Lage verliert.

Des Weiteren kann die erfindungsgemäße Vorrichtung derart ausgebildet sein, dass das vordere und hintere Riemenelement des ersten Seitenbereiches gleich lang und dass das vordere und hintere Riemenelement des zweiten Seitenbereiches gleich lang ausgeführt sind. Alternativ und/oder zusätzlich kann die Erfindung mitumfassen, dass der Antrieb ein unteres Umlenkrollenpaar in der Zuführebene und ein oberes Umlenkrollenpaar in der Abführebene aufweist, wobei die Umlenkrollenpaare als Getriebeelemente wirken.

In einer weiteren die Erfindung verbessernden Maßnahme, kann die erfindungsgemäße Vorrichtung derart ausgebildet sein, dass eine erste Umlenkrolle des unteren Umlenkrollenpaares für die Umlenkung des vorderen und des hinteren Riemenelementes des ersten Seitenbereiches dient und eine zweite Umlenkrolle des unteren Umlenkrollenpaares für die Umlenkung des vorderen und des hinteren Riemenelementes des zweiten Seitenbereiches dient. Zudem ist es denkbar, dass eine erste Umlenkrolle des oberen Umlenkrollenpaares für die Umlenkung des vorderen und des hinteren Riemenelementes des ersten Seitenbereiches dient und eine zweite Umlenkrolle des oberen Umlenkrollenpaares für die Umlenkung aller Riemenelemente dient. Ebenfalls kann die Erfindung miteinschließen, dass der Antrieb Hilfsrollen als Getriebeelemente aufweist, an denen alle umgelenkt werden, wobei insbesondere die Hilfsrollen zwischen der zweiten Umlenkrolle des oberen Umlenkrollenpaares und der ersten Rolle des unteren Rollenpaares angeordnet sind. Die Hilfsrollen dienen unter anderem dazu, dass das Mattenelement durch die Transportvorrichtung, einschließlich der Riemenelemente, innerhalb des Höhenförderers umlaufen kann, wobei in der Hubzone der Standfläche des Mattenelementes die Stapel von der Abführebene in die Zuführebene nach oben bewegt werden. In der Abführebene angekommen erfolgt über die Bewegung des Mattenelementes ein Abtransport der Stapel, die anschließend den erfindungsgemäßen Höhenförderer verlassen. An dieser Stelle des Höhenförderers ist die Transportrichtung des Mattenelementes sowie der Stapel senkrecht zur Transportrichtung innerhalb der Hubzone. Nachdem der Stapel in der Abführebene das Mattenelement verlässt, erfolgt eine Umlenkung des Mattenelementes entlang eines oder mehrerer Getriebeelemente, wobei das Mattenelement sich in der Transportzone befindet, in der die Standfläche des Mattenelementes parallel zur Bewegungsrichtung des Mattenelementes ist. Da in der Transportzone es notwendig sein kann, dass das Mattenelement weitere Umlenkungen erfährt, ist hierfür eine entsprechende Anzahl an Hilfsrollen als Getriebeelemente vorgesehen.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Darstellung einer Vorrichtung zum Höhentransport von Stapeln,
- Figur 2: eine weitere erfindungsgemäße Vorrichtung zum Höhentransport von Stapeln,
- Figur 3: eine Detailansicht auf ein Mattenelement, welches in einer Vorrichtung zum Höhentransport zum Einsatz kommen kann,
- Figur 4: eine weitere Ansicht auf ein Mattenelement in einer alternativen Ausgestaltung zu Figur 3,
- Figur 5: eine schematische Darstellung einer möglichen Vorrichtung zum Höhentransport von Stapeln,
- Figur 6: eine vereinfachte Darstellung bezüglich eines Mattenelementes, an dem Riemenelemente zur Bewegung des Mattenelementes angeordnet sind,
- Figur 7: eine dreidimensionale Seitenansicht auf eine mögliche Ausgestaltung eines Mattenelementes und
- Figur 8: eine vereinfachte Darstellung auf ein Mattenelement, das sich in einem Umlenkbereich befindet.

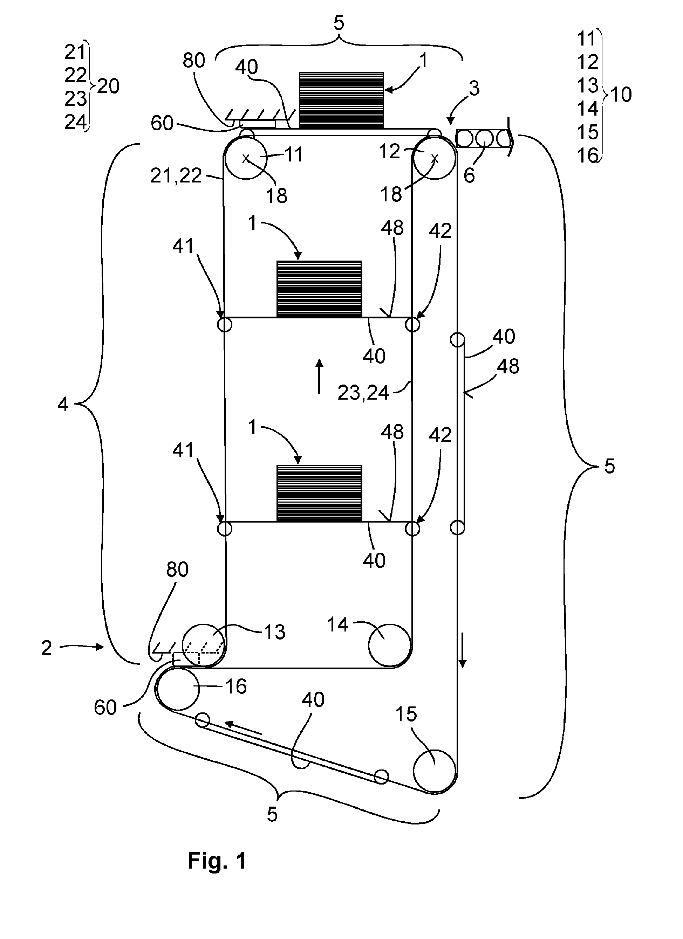

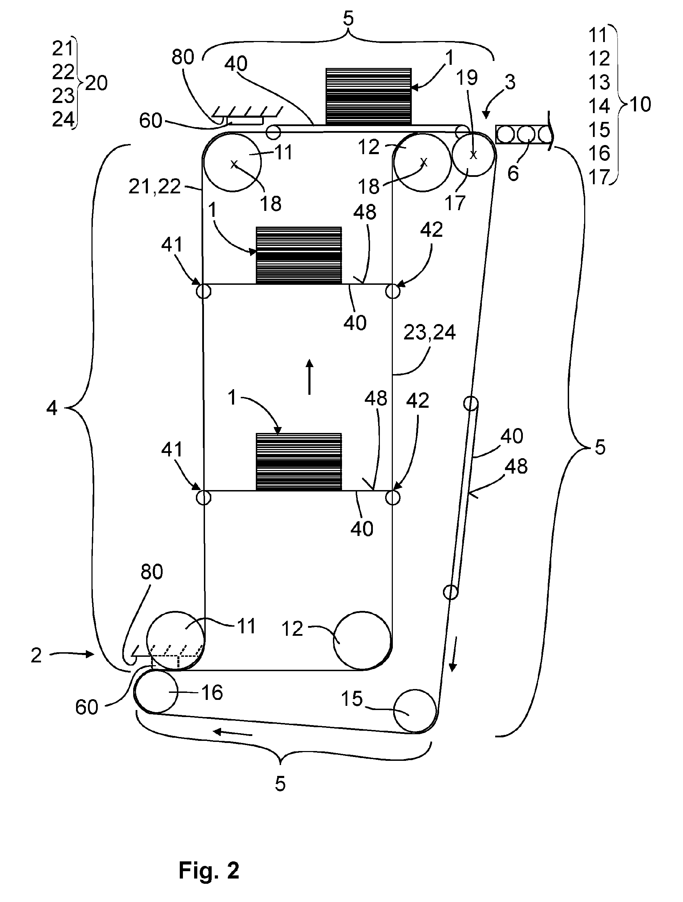

In Figur 1 und Figur 2 ist eine Vorrichtung zum Höhentransport, die auch als Höhenförderer bezeichnet wird, von Stapeln 1 dargestellt. Ein Stapel 1 setzt sich aus einer Vielzahl von übereinanderliegenden Stapelelementen zusammen. Die Stapelelemente können zum Beispiel flachliegende Säcke, Sackhalbzeuge oder Schlauchabschnitte sein, welche vor dem Höhenförderer hergestellt worden sind und von einer Produktionshöhe auf ein definiertes Höhenniveau mit Hilfe des Höhenförderers zu bringen sind. Wenn die Stapel 1 den Höhenförderer verlassen, kann zum Beispiel eine Palettierung der Stapel 1 in einem Palettierer erfolgt, welches explizit nicht dargestellt ist.

Die Vorrichtung weist eine Transportvorrichtung 20 auf, die mehrere, umlaufende Riemenelemente 21, 22, 23, 24 aufweist, an denen zumindest ein flexibles Mattenelement 40 angeordnet ist. In den Ausführungsbeispielen gemäß Figur 1 und Figur 2 sind mehrere Mattenelemente 40 vorgesehen, die über die Transportvorrichtung 20 in einer Hubzone 4 und in einer Transportzone 5 bewegt werden. Der Höhenförderer weist eine Zuführebene 2 auf, um eine Vielzahl an Stapeln 1 dem jeweiligen Mattenelement 40 zuzuführen, welches exemplarisch mittels einer Pfeildarstellung gezeigt ist. Die Transportvorrichtung 20 wird durch einen Antrieb 10 angetrieben, wobei der Antrieb 10 eine Vielzahl an Getriebeelementen 11, 12, 13, 14, 15, 16, 17 aufweist, die in Wirkverbindung mit den Riemenelementen 21, 22, 23, 24 stehen, um die Mattenelemente 40 von der Zuführebene 2 in eine Abführebene 3 und zurück zu bewegen. In der Abführebene 3 ist das gewünschte Höhenniveau für die einzelnen Stapel 1 erreicht, in der jeder Stapel 1 von dem jeweiligen Mattenelement 40 abgeführt wird und somit jeder Stapel 1 den Höhenförderer verlässt. Im Bereich der Abführebene 3 ist ein Rollensystem 6 dargestellt, das jeden Stapel 1 zu dem nächsten Bearbeitungsschritt, beispielsweise für eine Palettierung weiter befördert.

Die Getriebeelemente 11 - 16 sind derart angeordnet, dass die Hubzone 4 zwischen der Zuführebene 2 und der Abführebene 3 liegt. In der Hubzone 4 bietet das Mattenelement 40 eine Standfläche 48 für jeden Stapel 1. Die Standfläche 48 ist im Wesentlichen senkrecht zur Bewegungsrichtung des Mattenelementes 40 während des Transports in der Hubzone 4 ausgerichtet. In der Transportzone 5 ist die Standfläche 48 des Mattenelementes 40 parallel zur Bewegungsrichtung des Mattenelementes 40 ausgerichtet.

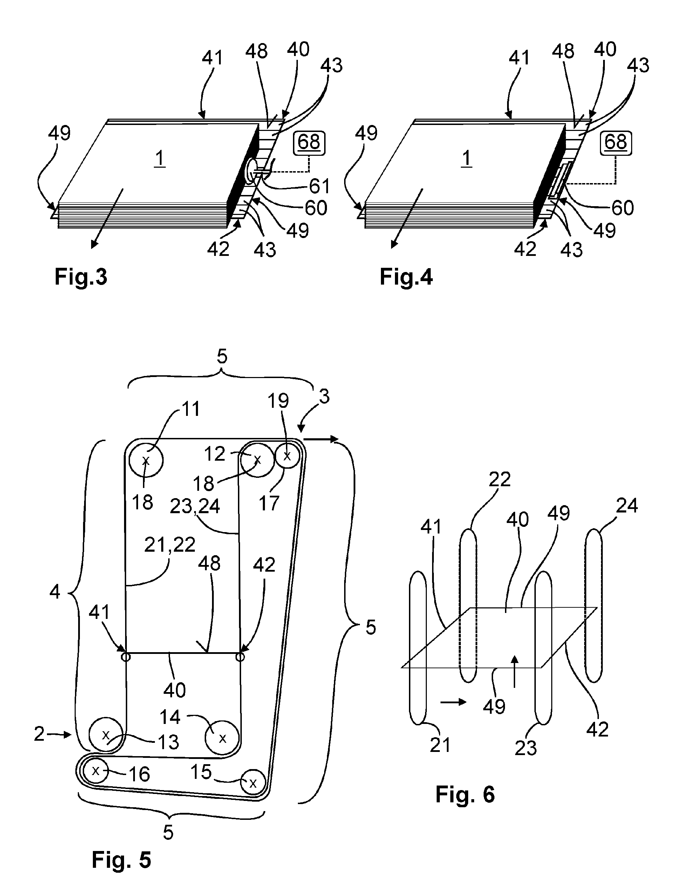

Jedes Mattenelement 40 weist zwei Seitenbereiche 41, 42 auf, die auch schematisch in Figur 6 gezeigt sind. Zudem zeigt Figur 6 die Bewegungsrichtung des Mattenelementes 40 in der Hubzone 4, in der sich das Mattenelement 40 von der Zuführebene 2 nach oben in Richtung Abführebene 3 bewegt (s. nach oben gerichteter Pfeil). Bevor das Mattenelement 40 in die Hubzone 4 gelangt, verfährt das Mattenelement 40 translatorisch nach rechts, welches in Figur 6 durch den nach rechts ausgerichteten Pfeil schematisch gezeigt ist. Das gleiche gilt, wenn das Mattenelement 40 die Abführebene 3 erreicht hat.

An jedem Seitenbereich 41, 42 sind jeweils zwei Riemenelemente 21 - 24 befestigt. Das bedeutet, dass gemäß Figur 6 am ersten Seitenbereich 41 ein vorderes Riemenelement 21 und ein hinteres Riemenelement 22 und am zweiten Seitenbereich 42 ein vorderes Riemenelement 23 und ein hinteres Riemenelement 24 befestigt sind. Die Riemenelemente 21 - 24 jedes Seitenbereiches 41, 42 sind jeweils beabstandet zueinander angeordnet.

Der Antrieb 10 gemäß Figur 1 und Figur 2 weist ein unteres Umlenkrollenpaar 13, 14 in der Zuführebene 2 und ein oberes Umlenkrollenpaar 11, 12 in der Abführebene 3 auf, wobei die Umlenkrollenpaare 11, 12, 13, 14, als Getriebeelemente wirken. In Figur 5 und Figur 6 ist vereinfacht die Anordnung der Riemenelemente 21 - 24 innerhalb des Höhenförderers gezeigt, wobei eine erste Umlenkrolle 13 des unteren Umlenkrollenpaares 13, 14 für die Umlenkung des vorderen 21 und des hinteren Riemenelementes 22 des ersten Seitenbereichs 41 dient und eine zweite Umlenkrolle 14 des unteren Umlenkrollenpaares 13, 14 für die Umlenkung des vorderen 23 und des hinteren Riemenelementes 24 des zweiten Seitenbereiches 42 dient. In der Transportzone 5 und zwar hinter der Abführebene 3 sind die Riemenelemente 21 - 24 durch den Antrieb 10 derart ausgerichtet, dass die Riemenelemente 21 - 24 hintereinander ausgerichtet sind, wobei die Standfläche 48 des Mattenelementes 40 parallel zur Bewegungsrichtung des Mattenelementes 40 positioniert ist.

Gemäß Figur 1 dient die erste Umlenkrolle 11 des oberen Umlenkrollenpaares 11, 12 für die Umlenkung des vorderen 21 und des hinteren Riemenelementes 22 des ersten Seitenbereichs 41 und die zweite Umlenkrolle 12 des oberen Umlenkrollenpaares 11, 12 dient für die Umlenkung aller Riemenelemente 21 - 24.

Gemäß Figur 2 kommen vergrößerte Umlenkrollen 11, 12, 13, 14 zum Einsatz, wobei der Antrieb 10 in der Abführebene 3 eine Übergaberolle 17 aufweist, die sich in der Bewegungsrichtung des Mattenelementes 10 dem oberen Rollenpaar 11, 12 anschließt. Das obere Rollenpaar 11, 12 weist einen wesentlich größeren Durchmesser auf, als die Übergaberolle 17. Gemäß Figur 2 dient die erste Umlenkrolle 11 des oberen Rollenpaares 11, 12 für die Umlenkung des vorderen 21 und hinteren Riemenelementes 22 des ersten Seitenbereiches 41. Die zweite Umlenkrolle 12 des oberen Rollenpaares 11, 12 dient der Umlenkung des vorderen 23 und des hinteren Riemenelementes 24, wobei gleichzeitig das vordere 21 und das hintere Riemenelement 22 des ersten Seitenbereiches 41 an der zweiten Umlenkrolle 12 des oberen Rollenpaares 11, 12 anliegt. Alle Riemenelemente 21 - 24 werden durch die Übergaberolle 17 umgelenkt. Die größeren Umlenkrollen 11 - 14 bewirken höhere Transportgeschwindigkeiten, wobei die Horizontalbeschleunigungen in den Umlenkpunkten wesentlich reduziert werden können. Die Übergaberolle 17, die in ihrem Durchmesser wesentlich verkleinert ist, ermöglicht eine saubere Übergabe der Stapel 1, welches insbesondere bei kleinsten Formaten bei den Stapelelementen bedeutsam ist.

Beispielsweise ist es gemäß der dargestellten Ausführungsbeispiele denkbar, dass ein Antriebsmotor im Antrieb 10 integriert ist, der zumindest eins der vielen Getriebeelemente direkt antreibt. Zum Beispiel kann vorteilhaft sein, dass der Antriebsmotor das Getriebeelement 12, insbesondere die zweite Umlenkrolle 12 antreibt, wodurch sämtliche Riemenelemente 21 - 24 in eine Umlaufbewegung setzbar sind, so dass die an den Riemenelementen 21 - 24 befestigten Mattenelemente 40 mitbewegt werden.

Wie in Figur 1 und Figur 2 gezeigt ist, weist die erfindungsgemäße Vorrichtung zum Höhentransport von Stapeln 1 am Mattenelement 40 ein Dämpfungselement 60 auf, wobei das Dämpfungselement 60 in der Zuführebene 2 und/oder in der Abführebene 3 angeordnet sein kann. In vorliegendem Ausführungsbeispiel ist das Dämpfungselement 60 am Gestell 80 des Höhenförderers befestigt. Ein wesentlicher Vorteil des Dämpfungselementes 60 ist, dass dieses derart auf das Mattenelement 40 wirkt, dass mögliche auf das Mattenelement 40 wirkende Kräfte und/oder Impulse und/oder Schwingungen nicht bewirken, dass das Mattenelement 40 sich derart bewegt, dass der zu transportierende Stapel sich verschiebt oder ausschuppt. Gemäß Figur 1 und Figur 2 befindet sich das Dämpfungselement 60 vor der Hubzone 4 und nach der Hubzone 4 am Mattenelement 40.

Gemäß Figur 3 kann das Dämpfungselement 60 eine Rolle sein, die das Mattenelement 40 auf der Standfläche 48 kontaktiert, wobei die Rolle eine Achse 61 aufweist, um die die Rolle 60 während der Bewegung des Mattenelementes 40 rotiert. Alternativ ist es denkbar, dass das Dämpfungselement 60 gemäß Figur 4 eine stabartige Leiste ist, die starr auf dem Mattenelement 40 aufliegt. Gemäß Figur 3 und Figur 4 ist gezeigt, dass das Dämpfungselement 60 am Randbereich 49 auf der Standfläche 48 wirkt. Zudem ist gezeigt, dass das Dämpfungselement 60 verfahrbar am Gestell 80 angeordnet sein kann, wobei ein Antrieb 68 vorgesehen sein kann, um das Dämpfungselement 60 an die Standfläche 48 des Mattenelementes 40 bis zum Kontakt heranzufahren. Die Dämpfungselemente 60 gemäß Figur 3 und Figur 4 sind beabstandet zum Stapel 1 angeordnet. Da in den Umlenkbereichen der Hilfsrolle 16 sowie der ersten Umlenkrolle 11 es sich gezeigt hat, dass Schwingungen am Mattenelement 40 entstehen, welches nachteiligerweise mit einem Ausschuppen des Stapels 1 verbunden wäre, erfolgt eine Positionierung der Dämpfungselemente 60 an den Stellen des Höhenförderers, die in Figur 1 und Figur 2 dargestellt sind.

In Figur 1 und Figur 2 weist der Antrieb 10 Hilfsrollen 15, 16 als Getriebeelemente auf, an denen alle Riemenelemente 21 - 24 umgelenkt werden, wobei die Hilfsrollen 15, 16 zwischen der zweiten Umlenkrolle 12 des oberen Umlenkrollenpaares 11, 12 und der ersten Umlenkrolle 13 des unteren Rollenpaares 13, 14 angeordnet sind. Gemäß Figur 2 befindet sich hinter der zweiten Umlenkrolle 12 des oberen Umlenkrollenpaares 11, 12 noch die Übergaberolle 17, an die sich die Hilfsrollen 15, 16 anschließen. Die erste 11 und die zweite Umlenkrolle 12 des oberen Rollenpaares 11, 12 sowie die sich anschließende Übergaberolle 17 weisen jeweils eine Achse 18, 19 auf, um die die erste 11, die zweite Umlenkrolle 12 sowie die Übergaberolle 17 drehbar gelagert sind. Die Achsen 18 der Umlenkrollen 11, 12 liegen gemeinsam auf einer horizontalen Ebene, wobei die Achse 19 der Übergaberolle 17 oberhalb der soeben genannten horizontalen Ebene liegt, so dass sich eine waagerechte Abführebene ergibt.

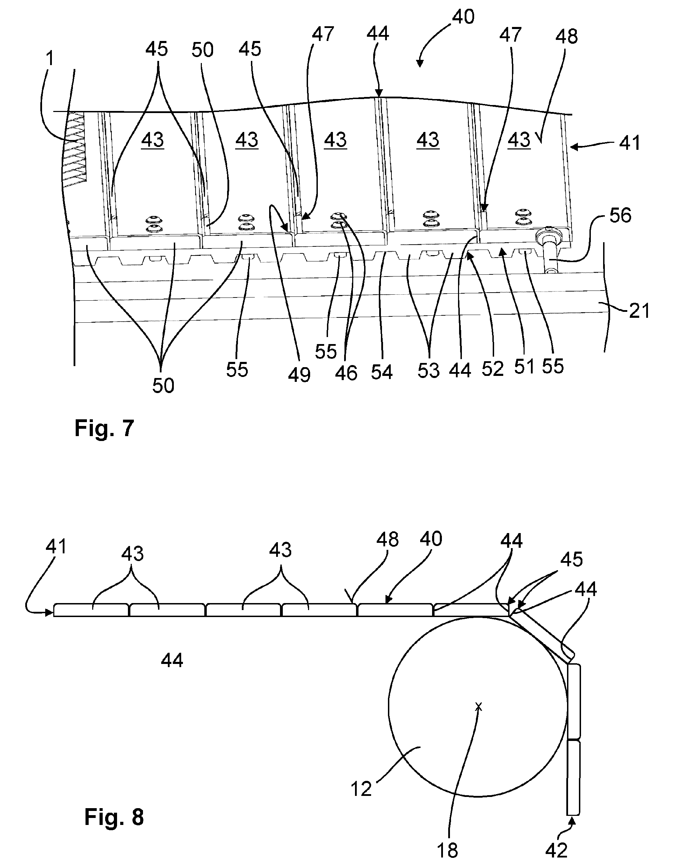

Um die Gefahr der Ausschuppung während des Transports innerhalb des Höhenförderers zu reduzieren, bzw. höhere Transportgeschwindigkeiten zu erreichen, ist es denkbar, das Mattenelement 40 mit einer Vielzahl an steifen Mattengliedern 43 auszuführen, welches in Figur 7 und Figur 8 gezeigt ist. Die Mattenglieder 43 sind derart benachbart zueinander angeordnet, dass bei der Umlenkung der Bewegungsrichtung des Mattenelementes 40 jedes Mattenglied 43 zum benachbarten Mattenglied 43 relativ bewegbar ist. Gemäß Figur 7 und Figur 8 weisen die Mattenglieder 43 sowohl in der Hubzone 4 als auch in der Transportzone 5 einen Abstand zueinander auf. Hierbei sind die Mattenglieder 43 aus Metall ausgebildet, im vorliegenden Ausführungsbeispiel aus Aluminium. Jedes Mattenglied 43 weist ein Hohlprofil auf, wobei ausgehend von der Standfläche 48 eines jeden Mattengliedes 43 zum benachbarten Mattenglied 43 jeweils eine Seitenwandung 44 sich anschließt. Die Seitenwandungen 44 sind zueinander im Wesentlichen parallel angeordnet. Zudem ist jede Seitenwandung 44 im Wesentlichen senkrecht zur Standfläche 48 des Mattengliedes 43 ausgerichtet. Im dargestellten Ausführungsbeispiel gemäß Figur 7 und Figur 8 ist das Mattenglied 43 als U-Profil ausgebildet, wobei zwischen der Seitenwandung 44 und der Standfläche 48 das Mattenglied 43 eine Abrundung 45 aufweist. In Figur 8 ist gezeigt, dass während der Umlenkung im Bereich der zweiten Umlenkrolle 12 der Abstand zwischen zwei benachbarten Mattengliedern 43 im Bereich der Abrundung 45 sich vergrößert.

Gemäß Figur 6 und Figur 7 weist jedes Mattenelement 40 zwei Randbereiche 49 auf, die parallel zur Bewegungsrichtung des Mattenelementes 40 zueinander ausgerichtet sind, wobei an den Randbereichen 49 die Riemenelemente 21 - 24 befestigt sind, worauf im Folgenden noch eingegangen wird. Die Befestigungspunkte befinden sich gleichzeitig im Bereich der Seitenbereiche 41, 42 des Mattenelementes 40.

Das Mattenelement 40 weist an jedem seiner beiden Randbereiche 49 ein Stabilisierungsmittel 50 auf, das in der Hubzone 4 eine horizontale Erstreckung der Standfläche 48 begünstigt. Gemäß Figur 7 befindet sich das Stabilisierungsmittel 50 innerhalb des Hohlprofils des Mattengliedes 43 und ist somit der Form des Hohlprofils angepasst. Eine der beiden Seitenwandungen 44 des jeweiligen Mattengliedes 43 weist eine Aussparung 47 auf, durch die das Stabilisierungsmittel 50 sich zumindest teilweise erstreckt und am benachbarten Mattenglied 43 an dessen Seitenwandung 44 anliegt. Zudem weist jedes Mattenelement 40 ein Biegemittel 51 auf, wodurch die Biegefähigkeit des Mattenelementes 40 begünstigt wird. Somit sind die Stabilisierungsmittel 50 sowie das Biegemittel 51 am Randbereich 49 des Mattengliedes 40 vorgesehen. Das Biegemittel 51 weist gemäß Figur 7 eine Rippenstruktur 52 auf, die vorsprungartige Rippen 53 hat, die quer zur Bewegungsrichtung des Mattenelementes 40 ausgerichtet sind. Zwischen den Rippen 53 befinden sich mehrere Freiräume 54, in dem ein Lagerelement 55 eingelegt ist. Das Lagerelement 55 wirkt als Mutter, um eine zuverlässige Befestigung mit dem Befestigungsmittel 46 zu erreichen, das das Stabilisierungsmittel 50 am Mattenglied 53 sowie am Biegemittel 51 hält. Im vorliegenden Ausführungsbeispiel weist jedes Mattenglied 53 zwei benachbart zueinander angeordnete Befestigungsmittel 46 auf. Über das Befestigungsmittel 46 ist gleichzeitig die Steifigkeit des Mattenelementes 40 einstellbar. Die Rippenstruktur 52 des Biegemittels 51 begünstigt die Biegefähigkeit des Mattenelementes 40.

Gemäß Figur 7 ist gezeigt, dass der Randbereich 49 des Mattenelementes 40 über ein Befestigungselement 56 mit sämtlichen Riemenelementen 21 bis 24 befestigt ist. Gemäß Figur 7 ist exemplarisch lediglich gezeigt, dass das Riemenelement 21 mit dem Randbereich 49 des Mattenelementes 40 über das Befestigungselement 56 befestigt ist. Gemäß des dargestellten Ausführungsbeispiels verbindet das Befestigungselement 56 das Stabilisierungsmittel 50 mit dem dazugehörigen Riemenelement 21. Vorteilhafterweise ist das Lagerelement 55 innerhalb des Freiraums 54 der Rippenstruktur 52 eingelassen, so dass es zu keiner Kollision mit anderen Gegenständen innerhalb des Höhenförderers kommen kann.

Um hohe Transportgeschwindigkeiten in den Höhenförderer gemäß Figur 1 und Figur 2 zu erreichen und/oder während des Transports der Stapel 1 keine Ausschuppung entstehen zu lassen, ist es denkbar, lediglich die in Figur 3 und Figur 4 gezeigten Dämpfungselemente 60 einzusetzen. Bezüglich der soeben genannten Ziele ist es alternativ denkbar, anstelle der Getriebeelemente 11, 12, 13, 14 gemäß Figur 1 vergrößerte Umlenkrollen 11, 12, 13, 14 sowie die Übergaberolle 17 einzusetzen. In einer weiteren Alternative kann hilfreich sein, das Mattenelement 44 mit einer Vielzahl an separaten, steifen Mattengliedern 43 auszubilden, die in der Figur 7 und Figur 8 gezeigt sind. Das bedeutet, dass gemäß Figur 1 und/oder Figur 2 ein derartiges Mattenelement 40 zum Einsatz kommen kann.

### Bezugszeichenliste

- 1: Stapel
- 2: Zuführebene
- 3: Abführebene
- 4: Hubzone
- 5: Transportzone
- 6: Rollensystem

- 10: Antrieb
- 11: Getriebeelement, erste Umlenkrolle
- 12: Getriebeelement, zweite Umlenkrolle
- 13: Getriebeelement, erste Umlenkrolle
- 14: Getriebeelement, zweite Umlenkrolle
- 15: Hilfsrolle
- 16: Hilfsrolle
- 17: Übergaberolle
- 18: Achse (von 11, 12)
- 19: Achse (von 17)

- 20: Transportvorrichtung
- 21: Riemenelement, vorderes Riemenelement
- 22: Riemenelement, hinteres Riemenelement
- 23: Riemenelement, vorderes Riemenelement
- 24: Riemenelement, hinteres Riemenelement

- 40: Mattenelement
- 41: erster Seitenbereich
- 42: zweiter Seitenbereich
- 43: Mattenglied
- 44: Seitenwandung
- 45: Abrundung

- 46: Befestigungsmittel
- 47: Aussparung
- 48: Standfläche
- 49: Randbereich

- 50: Stabilisierungsmittel
- 51: Mittel, Biegemittel
- 52: Rippenstruktur
- 53: Rippen
- 54: Freiraum
- 55: Lagerelement
- 56: Befestigungselement

- 60: Dämpfungselement
- 61: Achse
- 68: Antrieb für 60

- 80: Gestell

## Patentansprüche

1. Vorrichtung zum Höhentransport von Stapeln (1), insbesondere Säcken, Sackhalbzeugen, Schlauchabschnitten oder flachliegenden Säcken, welche folgende Merkmale umfasst:
eine Transportvorrichtung (20), die mehrere, umlaufende Riemenelemente (21,22,23,24) aufweist, an denen zumindest ein flexibles Mattenelement (40) angeordnet ist,
eine Zuführebene (2), um Stapel (1) dem Mattenelement (40) zuzuführen,
eine Abführebene (3), um Stapel (1) von dem Mattenelement (40) abzuführen,
ein Antrieb (10), der eine Vielzahl an Getriebeelementen (11,12,13,14,15,16,17) aufweist, die in Wirkverbindung mit den Riemenelementen (21,22,23,24) stehen, um das Mattenelement (40) von der Zuführebene (2) in die Abführebene (3) und zurück zu bewegen, wobei die Getriebeelemente (11,12,13,14,15,16,17) derart angeordnet sind, dass
sich eine Hubzone (4) und eine Transportzone (5) bilden, wobei die Hubzone (4) zwischen der Zuführebene (2) und der Abführebene (3) liegt,
wobei in der Hubzone (4) das Mattenelement (40) eine Standfläche (48) für den Stapel (1) bietet, die im wesentlichen senkrecht zur Bewegungsrichtung des Mattenelementes (40) ausgerichtet ist, und
in der Transportzone (5) die Standfläche (48) des Mattenelementes (40) parallel zur Bewegungsrichtung des Mattenelementes (40) ist, wobei
am Mattenelement (40) mindestens ein Dämpfungselement (60) angeordnet ist, um auftretenden Schwingungen am Mattenelement (40) entgegenzuwirken.

2. Vorrichtung nach Anspruch 1,
**dadurch gekennzeichnet,**
**dass** das Dämpfungselement (60) in der Zuführebene (2) und/oder in der Abführebene (3) angeordnet ist.

3. Vorrichtung nach Anspruch 1 oder 2,
**dadurch gekennzeichnet,**
**dass** das Dämpfungselement (60) am Gestell (80) der Vorrichtung befestigt ist.

4. Vorrichtung nach einem der vorhergehenden Ansprüche,
**dadurch gekennzeichnet,**
**dass** das Dämpfungselement (60) vor der Hubzone (4) und/oder nach der Hubzone (4) am Mattenelement (40) anliegt und/oder dass mehrere Dämpfungselemente (60) am Randbereich (49) des Mattenelementes (40) wirken.

5. Vorrichtung nach einem der vorhergehenden Ansprüche,
**dadurch gekennzeichnet,**
**dass** das Dämpfungselement (60) auf die Standfläche (48) wirkt, auf der der Stapel (1) aufsetzbar ist, und/oder dass das Dämpfungselement (60) aus einem Kunststoffmaterial ausgeführt ist.

6. Vorrichtung nach einem der vorhergehenden Ansprüche,
**dadurch gekennzeichnet,**
**dass** das Dämpfungselement (60) verfahrbar am Gestell (80) angeordnet ist, insbesondere dass ein Antrieb (68) vorgesehen ist, um das Dämpfungselement (60) an die Standfläche (48) des Mattenelementes (40) bis zum Kontakt heranzufahren.

7. Vorrichtung nach einem der vorhergehenden Ansprüche,
**dadurch gekennzeichnet,**
**dass** das Dämpfungselement (60) eine stabartige Leiste und/oder Schiene ist, die insbesondere starr und/oder unbeweglich zum Mattenelement (40) angeordnet ist.

8. Vorrichtung nach einem der vorhergehenden Ansprüche,
**dadurch gekennzeichnet,**
**dass** das Dämpfungselement (60) eine Rolle ist, die das Mattenelement (40) kontaktiert und eine Achse (61) aufweist, um die die Rolle (60) während der Bewegung des Mattenelementes (40) rotiert.

9. Vorrichtung nach einem der vorhergehenden Ansprüche,
**dadurch gekennzeichnet,**
**dass** das Dämpfungselement (60) bezüglich der Breite des Mattenelementes (40) einstellbar ist, wobei insbesondere die Einstellung in Abhängigkeit vom Format des Stapels (1) abhängt.

10. Vorrichtung nach einem der vorhergehenden Ansprüche,
**dadurch gekennzeichnet,**
**dass** das Dämpfungselement (60) zum Stapel (1), der auf die Standfläche (48) aufstellbar ist, beabstandet ist.

11. Vorrichtung nach einem der vorhergehenden Ansprüche,
**dadurch gekennzeichnet,**
**dass** das Mattenelement (40) zwei Seitenbereiche (41,42) aufweist, wobei an jedem Seitenbereich (41,42) zwei Riemenelemente (21,22,23,24) befestigt sind, so dass am ersten Seitenbereich (41) ein vorderes (21) und ein hinteres Riemenelement (22) und am zweiten Seitenbereich (42) ein vorderes (23) und ein hinteres Riemenelement (24) befestigt sind, wobei die Riemenelemente (21,22,23,24) jedes Seitenbereiches (41,42) voneinander beabstandet sind, insbesondere dass das vordere (21) und hintere Riemenelement (22) des ersten Seitenbereiches (41) gleich lang und dass das vordere (23) und hintere Riemenelement (24) des zweiten Seitenbereiches (42) gleich lang ausgeführt sind.

12. Vorrichtung nach einem der vorhergehenden Ansprüche,
**dadurch gekennzeichnet,**
**dass** der Antrieb (10) ein unteres Umlenkrollenpaar (13,14) in der Zuführebene (2) und ein oberes Umlenkrollenpaar (11,12) in der Abführebene (3) aufweist, wobei die Umlenkrollenpaare (11,12,13,14) als Getriebeelemente wirken.

13. Vorrichtung nach einem der vorhergehenden Ansprüche,
**dadurch gekennzeichnet,**
**dass** eine erste Umlenkrolle (13) des unteren Umlenkrollenpaares (13,14) für die Umlenkung des vorderen (21) und des hinteren Riemenelementes (22) des ersten Seitenbereiches (41) dient und eine zweite Umlenkrolle (14) des unteren Umlenkrollenpaares (13,14) für die Umlenkung des vorderen (23) und des hinteren Riemenelementes (24) des zweiten Seitenbereiches (42) dient.

14. Vorrichtung nach einem der vorhergehenden Ansprüche,
**dadurch gekennzeichnet,**
**dass** eine erste Umlenkrolle (11) des oberen Umlenkrollenpaares (11,12) für die Umlenkung des vorderen (21) und des hinteren Riemenelementes (22) des ersten Seitenbereiches (41) dient und eine zweite Umlenkrolle (12) des oberen Umlenkrollenpaares (11,12) für die Umlenkung aller Riemenelemente (21,22,23,24) dient.

15. Vorrichtung nach einem der vorhergehenden Ansprüche,
**dadurch gekennzeichnet,**
**dass** der Antrieb (10) Hilfsrollen (15,16) als Getriebeelemente aufweist, an denen alle Riemenelemente (21,22,23,24) umgelenkt werden, wobei insbesondere die Hilfsrollen (15,16) zwischen der zweiten Umlenkrolle (12) des oberen Umlenkrollenpaares (11,12) und der ersten Umlenkrolle (13) des unteren Rollenpaares (13,14) angeordnet sind.
